# EUROPEAN PATENT SPECIFICATION

(11) **EP 0 570 590 B1**
(45) Date of publication and mention of the grant of the patent: **26.03.1997**
(21) Application number: 92924870.6
(22) Date of filing: 02.12.1992
(51) Int. Cl.: H01M 2/26, H01M 4/70, H01M 6/12, H01M 6/50, H01M 2/02, H01M 2/34

(54) **THIN BATTERY AND MONOLITHIC THIN BATTERY**
DÜNNE BATTERIE UND MONOLITISCHE DÜNNE BATTERIE
PILE MINCE ET PILE MINCE MONOLITIQUE

(30) Priority: 06.12.1991 JP 349531/91; 06.12.1991 JP 349532/91
(43) Date of publication of application: 24.11.1993
(73) Proprietor: YUASA CORPORATION, Takatsuki-shi, Osaka 569 (JP)
(72) Inventor: KAGAWA, Hiroshi, Takatsuki-shi Osaka 569 (JP); KATO, Shiro, Takatsuki-shi Osaka 569 (JP); MURATA, Kazuo, Takatsuki-shi Osaka 569 (JP)
(74) Representative: Linn, Samuel Jonathan
(86) International application number: PCT/JP92/01577
(87) International publication number: WO 93/11572

(56) References cited:
- EP-A- 0 271 086
- EP-A- 0 391 443
- EP-A- 0 533 577
- DE-A- 1 915 598
- DE-A- 3 916 050
- JP-A- 3 241 669
- JP-A-61 126 765
- JP-U-61 068 469
- JP-U-64 038 764

## Description

### Technical Field

This invention relates to a film type battery and a layer-built film type battery for use in an ID card, a portable telephone, a memory card, a pocket bell and an electric automobile etc., for example.

### Background Art

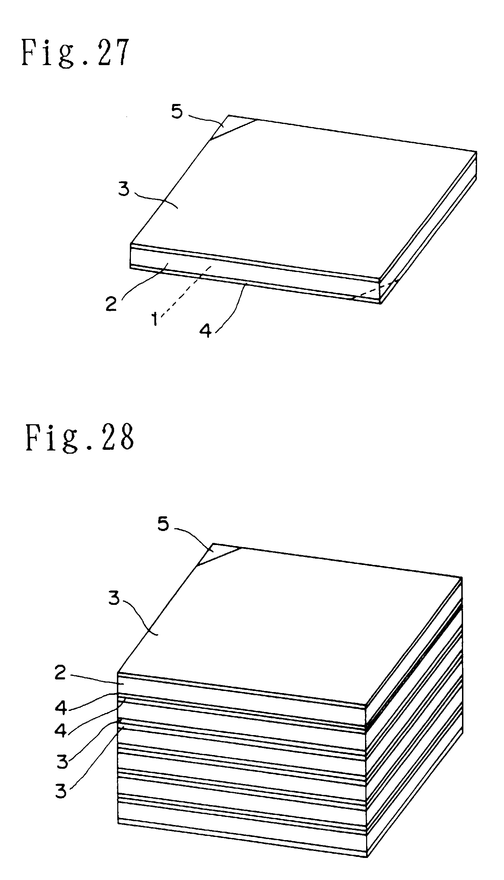

A conventional film type battery was made up in such a way that a sealing agent 2 was put around a generating element 1 formed by laminating a positive active material, an electrclyte and a negative active material into a layer structure, a positive current collector plate 3 and a negative current collector late 4 were disposed above and below the generating element 1, and the generating element 1 was sealed and the both current collector plates 3 and 4 were bonded by the sealing agent 2, as shown by Fig. 27. Terminals 5 were formed by leaving surfaces of corners of the both current collector plates 3 and 4 as they were and covering the other surfaces by synthetic resin etc.

Such a film type battery was used also as a layer-built film type battery by being laminated in plural layers as shown by Fig. 28.

However, in the film type battery having the foregoing structure, its internal temperature would sometimes rise to cause firing or bursting in the worst case, when its power consumption became large. This also applied similarly to the layer-built film type battery having the foregoing structure.

JP-A-3-241669 describes a film-type battery having projections on upper and lower metal plates in contact with the electrodes to improve heat radiation.

JP-A-61-126765 discloses a flat battery having projecting negative and positive terminal plates to enable stacking of adjacent battery elements.

EP-A-271086 discloses an electrochemical battery containing a stack of elements joined to current-collecting rods and mounted in a housing. Fusible links are connected between the anodes and the current-collecting rods. The entire assembly is mounted in a cylindrical can.

The present invention is concerned with film-type batteries and embodiments of the invention can provide a compact self-supporting film-type battery and a layer-built film type battery which can be prevented from undergoing a rise in its internal temperature and from firing and bursting even when a power consumption becomes large.

### Disclosure of the Invention

In a film type battery made up in such a way that a positive current collector plate, a positive active material, electrolytes, a negative active material and a negative current collector plate are laminated into a layer structure, and the both active materials and the electrolytes are sealed at their peripheries and the both current collector plates are integrated by sealing agents; a film type battery of this invention is characterized by that portions where the active materials, the electrolytes and the sealing agents do not exist are left on respective current collector plates and terminal pieces are fitted to one sides of respective current collector plates, and a middle part of the terminal piece is made narrow. The terminal piece will be molten down at the narrowed part in the event where a consumed power exceeds a specified limit. Accordingly, the terminal piece will function as a fuse.

When the terminal piece of the positive current collector plate and the terminal piece of the negative current collector plate are so installed as not to be laid one upon another when they are viewed from a plan view position, an electric short-circuiting can be avoided.

Further, when the radiation fin portion of positive current collector plate and the radiation fin portion of negative current collector plate are so installed as not to be laid one upon another when they are viewed from the plan view position, the electric short-circuiting can be avoided.

Moreover, when the middle part of terminal piece is made narrow and a rear part beyond the narrowed part is made smaller in width than a front part, respective terminal pieces of the positive current collector plates are so fitted that only respective front parts are laid upon another when they are viewed from the plan view position, and respective terminal pieces of the negative current collector plates are fitted in the same way; then the positive terminal pieces and the negative terminal pieces can be prevented from being electrically connected each other by molten-down remains, so that the fuse function can be exercised securely.

When the tip ends of respective terminal pieces are previously coated with zinc, tin-zinc alloy or tin-lead alloy, the terminal pieces will be jointed easily.

### Brief Description of the Drawings

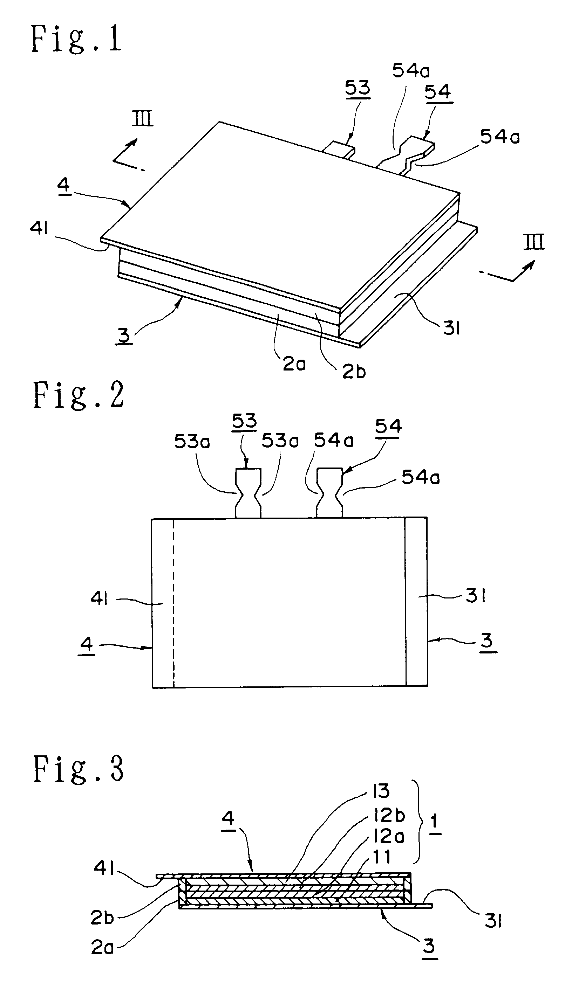

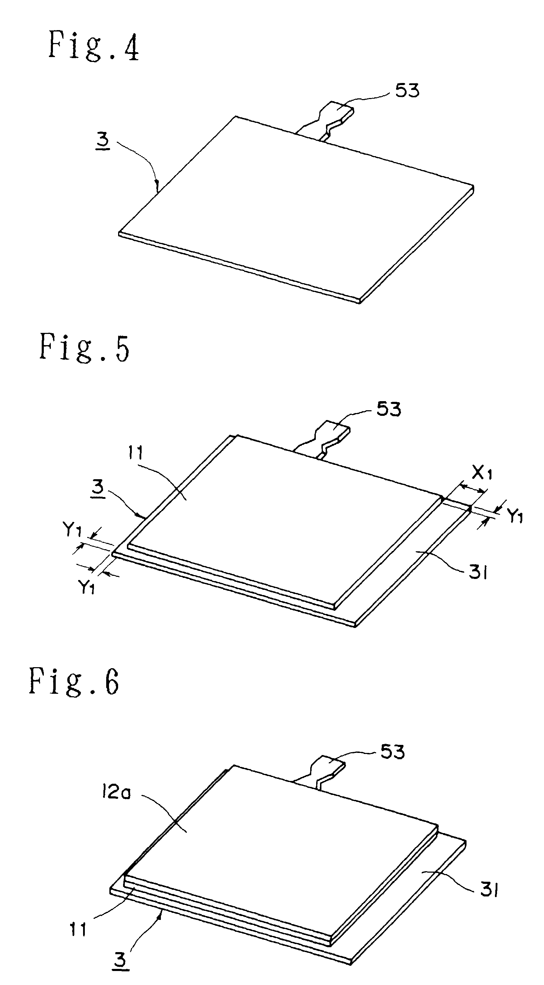

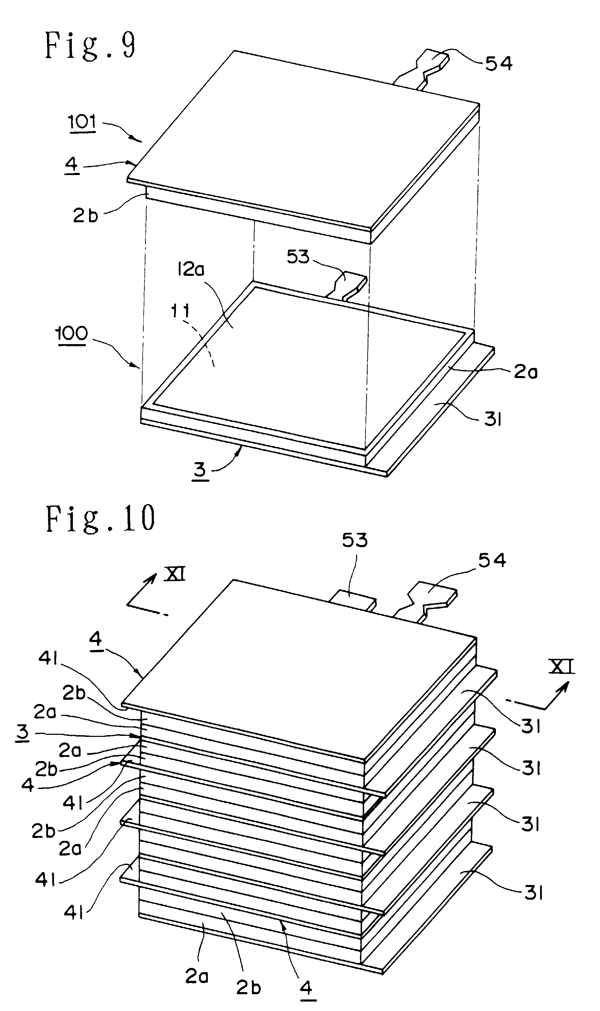

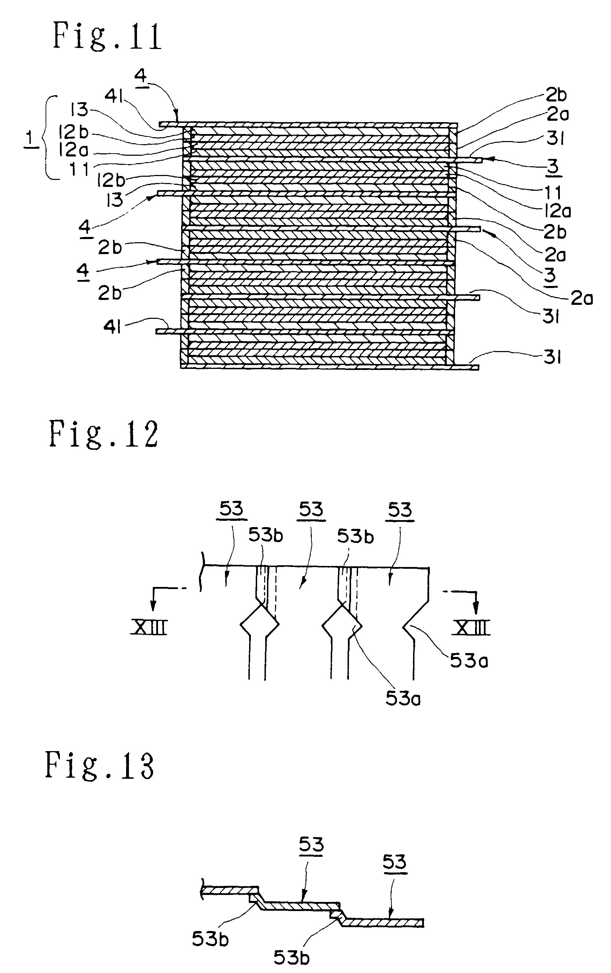

Fig. 1 is an oblique view showing a film type battery of embodiment 1. Fig. 2 is a plan view of the same. Fig. 3 is a sectional view taken on a line III-III of Fig. 1. Fig.4 to Fig. 9 are oblique views showing processes for forming the film type battery of embodiment 1, respectively. Fig. 10 is an oblique view showing a layer-built film type battery of embodiment 2. Fig. 11 is a sectional view taken on a line XI-XI of Fig. 10. Fig. 12 is a plan view showing a jointed state of neighboring terminal pieces in the battery of embodiment 2. Fig. 13 is a sectional view taken on a line XIII-XIII of Fig. 12.

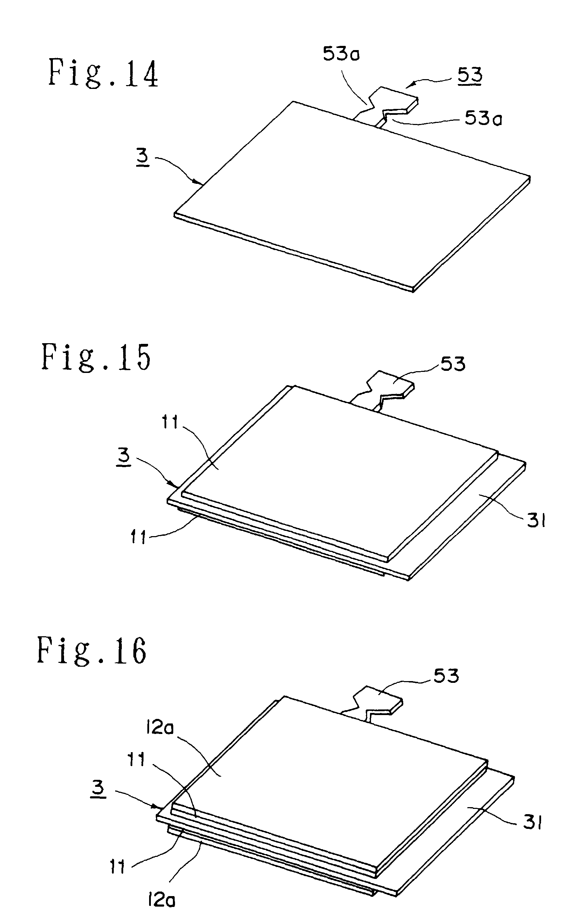

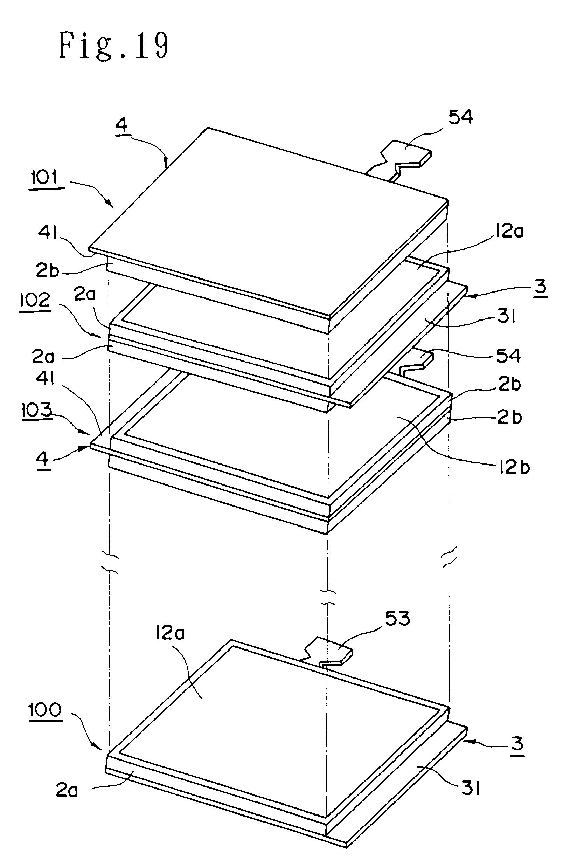

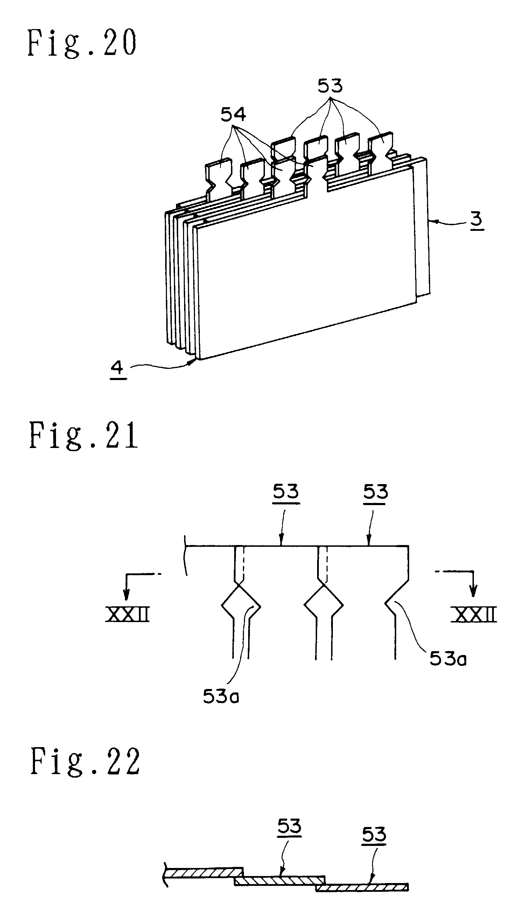

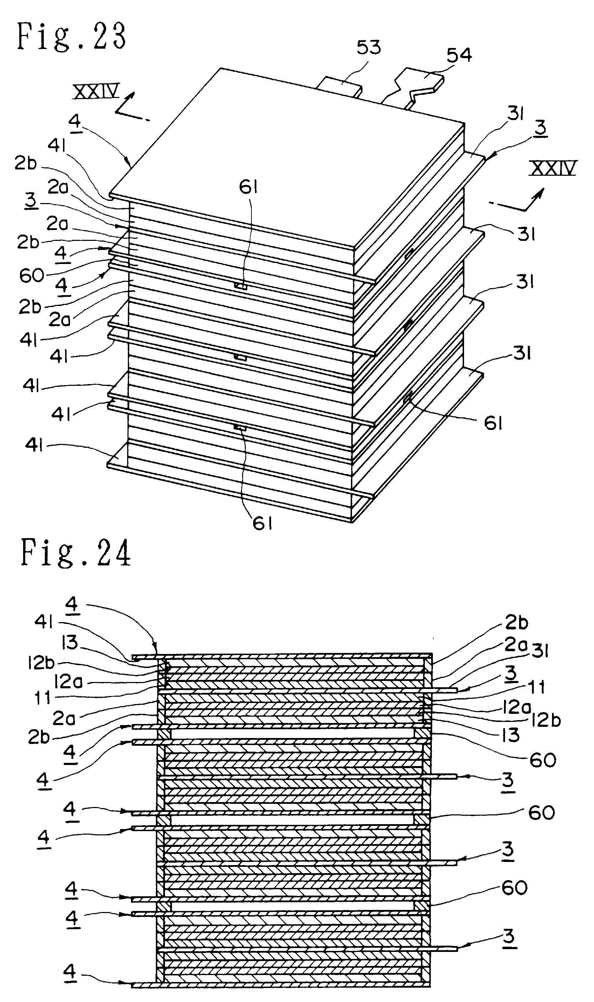

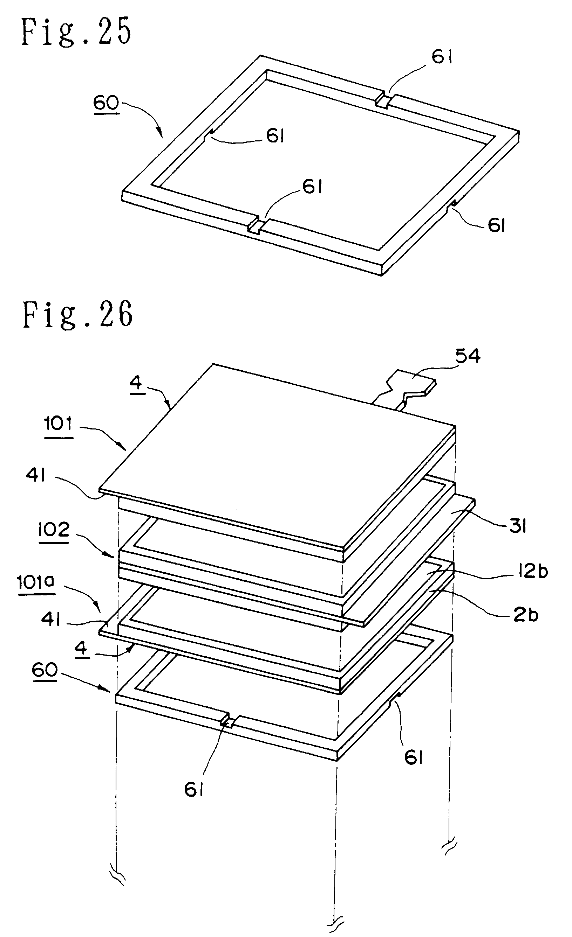

Fig. 14 to Fig. 19 are oblique views showing processes for forming the layer-built film type battery of embodiment 2, respectively. Fig. 20 is an oblique view showing an assembly obtained through the process of Fig. 19 with the terminal pieces positioned upside. Fig. 21 is a plan view showing another example of jointed state of neighboring terminal pieces. Fig. 22 is a sectional view taken on a line XXII-XXII of Fig. 21. Fig. 23 is an oblique view showing a layer-built film type battery of embodiment 3. Fig. 24 is a sectional view taken on a line XXIV-XXIV of Fig. 23. Fig.25 is an oblique view showing a frame material for use in the battery of embodiment 3. Fig. 26 is an oblique view showing a process for forming the battery of embodiment 3. Fig. 27 is an oblique view showing a conventional film type battery. Fig. 28 is an oblique view showing a conventional layer-built film type battery.

### Best Mode for Carrying Out the Invention

### (Embodiment 1)

Fig. 1 is an oblique view showing an embodiment of a film type battery of this invention. Fig. 2 is a plan view of the same. Fig.3 is a sectional view taken on a line III-III of Fig. 1. This film type battery is formed by laminating a positive current collector plate 3, a positive active material layer 11, electrolyte layers 12a and 12b, a negative active material layer 13 and a negative current collector plate 4 into a layer structure. A periphery of a generating element 1 comprising the both active material layers 11 and 13 and electrolyte layers 12a and 12b is sealed and at the same time the both current collector plates 3 and 4 are integrated by sealing agents 2a and 2b.

For example, the both current collector plates 3 and 4 are made of stainless steel, the positive active material has a principal component of manganese dioxide, the negative active material is lithium, the electrolyte is polymer solid electrolyte prepared by adding lithium perchlorate to polyethylene oxide, and the sealing agents 2a and 2b are polypropylene-based thermal bonding resin including addition agents. They are not limited to these materials, and a material including carbon material may be used for the negative active material.

A portion 31 where the generating element 1 and the sealing agent 2a do not exist is left on one side part of the positive current collector plate 3, and a portion 41 where the generating element 1 and the sealing agent 2b do not exist is left on one side part of the negative current collector plate 4. The portion 31 and the portion 41 are located at opposite positions each other in the film type battery. In other words, the portion 31 and the portion 41 are so installed as not to be laid upon another when the film type battery is viewed in the plan view position.

A terminal piece 53 is fitted to one side of the positive current collector plate 3, and a terminal piece 54 is fitted to one side of the negative current collector plate 4. In the film type battery, the terminal pieces 53 and 54 are fitted to the same side different from the side on which the portions 31 and 41 are installed, and fitted in such a way as not to be laid upon another when the film type battery is viewed in the plan view position. The terminal pieces 53 and 54 are not fitted to intermediate points of respective current collector plates 3 and 4, but fitted to positions slightly deviated from them. Notches 53a and 54a are formed on the terminal pieces 53 and 54 from both sides at middle parts in longitudinal direction, so that the terminal pieces 53 and 54 are made narrow in widths at middle parts.

The film type battery having such structure is formed by way of processes shown in Fig. 4 to Fig. 9. Namely, in the first place, the positive current collector plate 3 fitted with the terminal piece 53 as shown by Fig. 4 is prepared, and a positive active material is screen printed on a surface of the positive current collector plate 3 to form a positive active material layer 11 as shown by Fig. 5. In this instance, the positive active material layer 11 is so formed as to leave a large space on a side which will become the portion 31, and a small space is left on the other side. In concrete, in case for example when the positive current collector plate 3 has a vertical length of 54 mm and a lateral length of 86 mm, the positive active material layer 11 is to be formed into a rectangular having a vertical length of 50 mm and a lateral length of 76 mm, so that X1 = 8 mm is to be left on the side becoming the portion 31 and Y1 = 2 mm is to be left on the other side.

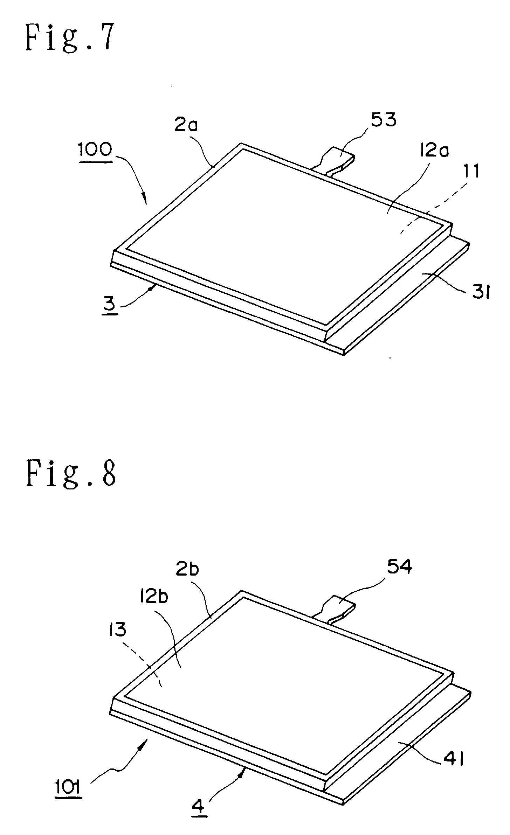

In the next place, an electrolyte is screen printed on the positive active material layer 11 to form an electrolyte layer 12a as shown by Fig. 6. Then, the sealing agent 2a is put on and bonded to peripheries of the positive active material layer 11 and the electrolyte layer 12a so as to obtain a processed article 100 shown in Fig. 7. In this instance, the sealing agent 2a is to be put to fill the portion Y1 (Fig. 5) in the same widths as those of the peripheries.

On the other hand, the negative current collector plate 4 having the same dimensions and shapes as those of the positive current collector plate 3 is prepared. Then, in the same processes as those of Fig. 4 to Fig. 6, the negative active material layer 13 and the electrolyte layer 12b are formed on the negative current collector plate 4 and the sealing agent 2b is further formed so as to obtain a processed article 101 shown in Fig.8.

As shown by Fig. 9, the processed article 100 of Fig. 7 and the processed article 101 of Fig. 8 are placed face to face so as to be laid one upon another at portions of the electrolyte layers 12a and 12b, the sealing agents 2a and 2b are thermally bonded each other under reduced pressure, so that an inside surrounded by the both current collector plates 3 and 4 and the sealing agents 2a and 2b is reduced pressure and hermetically sealed. Thereby, the film type battery of this embodiment shown in Fig. 1 can be obtained. A thickness of the generating element 1 is 0.2 to 1.0 mm.

In the film type battery of this embodiment, heat radiation is done well because the portion 31 of the positive current collector plate 3 and the portion 41 of the negative current collector plate 4 function as radiation fins. Therefore, according to the film type battery of this embodiment, the rise of internal temperature can be controlled even when the power consumption becomes large. Maximum values of internal temperature at high-rate discharge were examined on the film type battery of this embodiment and the conventional film type battery shown by Fig. 27, and the value was 57°C for the conventional battery and it was 26°C for the battery of this embodiment. In other words, the rise of internal temperature is controlled to the extremely low value in the battery of this embodiment.

In addition, since the portion 31 and the portion 41 are so installed as not to be laid one upon another when the film type battery is viewed in the plan view position, the electric short-circuiting is not produced. Since the terminal pieces 53 and 54 are also so fitted as not to be laid one upon another when the film type battery is viewed in the plan view position, the electric short-circuiting is not produced.

Further, since the notches 53a and 54a are formed on the terminal pieces 53 and 54 so that they are made narrow at middle parts, the pieces will be molten down at the narrowed portions when the consumed power exceeds a specified value. Namely, the terminal pieces 53 and 54 function also as fuses. Consequently, an abnormal rise of internal temperature can be avoided so that bad influences on envionments caused by firing and bursting of the battery can be prevented.

Moreover, since the processed article 100 of Fig. 7 and the processed article 101 of Fig. 8 are those obtained by continuously processing the positive active material plate 3 and the negative active material plate 4 having same dimensions and shapes by using the similar processes, the film type battery of this embodiment can be obtained with good productivity.

As described above, according to the film type battery of this embodiment, the rise of internal temperature can be controlled to an extremely low value even when the power consumption becomes large, the bad influences on environments caused by the abnormal rise of internal temperature can be prevented securely, these advantages can be accomplished without producing the electric short-circuiting, and productivity can be improved.

### (Embodiment 2)

Fig. 10 is an oblique view showing an embodiment of layer-built film type battery of this invention. Fig. 11 is a sectional view taken on a line XI-XI of Fig. 10. This layer-built film type battery is made up in such a way that the positive active material layer 11, the electrolyte layers 12a and 12b, and the negative active material layer 13 are laminated into a layer structure to form the generating element 1 and plural generating elements 1 are laminated with the positive current collector plates 3 or the negative current collector plates 4 put between them. The both active material layers 11 and 13 and the electrolyte layers 12a and 12b are sealed at their peripheries and the both current collector plates 3 and 4 are integrated by the sealing agents 2a and 2b.

Materials for use in the both current collector plates 3 and 4, the active materials, the electrolytes and the sealing agents 2a and 2b are same with those of the embodiment 1.

The portions 31 and 41 similar to those of the embodiment 1 are installed on the positive current collector plate 3 and the negative current collector plate 4, and the portion 31 and the portion 41 are located at opposite positions each other in the layer-built film type battery. In other words, the portion 31 and the portion 41 are so installed as not to be laid one upon another when the layer-built film type battery is viewed in the plan view position.

The terminal pieces 53 and 54, on which the notches 53a and 54a are formed in the same way as the embodiment 1, are fitted to one sides of the positive current collector plate 3 and the negative current collector plate 4 respectively in the same way as the embodiment 1, that is, in such a way as not to be laid one upon another when the layer-built film type battery is viewed in the plan view position. The terminal pieces 53 and 54 are made narrow in widths at their rear parts beyond the notches 53a and 54a rather than at their front parts, the respective terminal pieces 53 are so fitted as to be laid one upon another only at their front parts when the layer-built film type battery is viewed in the plan view position, and the terminal pieces 54 are also fitted in the same way. All of the terminal pieces 53 are jointed integrally each other as illustrated by Fig. 12. Fig. 13 is a sectional view taken on a line XIII-XIII of Fig. 12. Namely, the adjoining terminal pieces 53 are so jointed that a side portion 53b of front part of one terminal piece 53 is bent to the other terminal piece 53 side to be in contact with it. The terminal pieces 54 are also jointed in the same way. All of the terminal pieces 53 are jointed integrally each other by melting zinc which has been coated previously on their tip ends, and all of the terminal pieces 54 are jointed integrally each other in the same way. Tin-zinc alloy or tin-lead alloy may be used in place of the zinc.

The layer-built film type battery having such structure is formed by way of processes shown in Fig. 14 to Fig. 19. Namely, in the first place, the positive current collector plate 3 provided with the terminal piece 53 as shown by Fig. 14 is prepared. The front part of the terminal plate 53 is previously coated with fine powder of zinc by blowing while masking its rear part beyond the notch 53a. A positive active material is screen printed on front and back surfaces of the positive current collector plate 3 to form a positive active material layer 11 as shown by Fig. 15. In this instance, a range of the positive active material layer 11 is same with that of the embodiment 1.

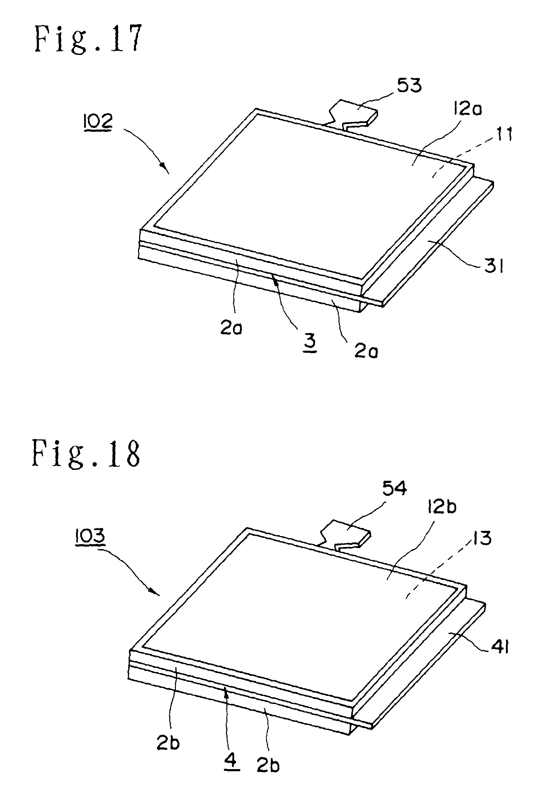

In the next place, an electrolyte is screen printed on the positive active material layers 11 of both surfaces to form the electrolyte layers 12a as shown by Fig. 16. Then, the sealing agents 2a are put on and bonded to peripheries of the positive active material layers 11 and the electrolyte layers 12a of both surfaces so as to obtain a processed article 102 shown in Fig. 17. The sealing agents 2a are put in the same way as those of the embodiment 1.

On the other hand, the negative current collector plate 4 having the same dimensions and shapes as those of the positive current collector plate 3 of Fig. 14 is prepared. The negative active material layers 13 and the electrolyte layers 12b are formed on front and back surfaces of the negative current collector plate 4 in the same processes as those of Fig. 14 to Fig. 16, and the sealing agents 2b are further formed so as to obtain a processed article 103 shown in Fig. 18.

While, a processed article 100 shown in Fig. 7 and a processed article 101 shown in Fig. 8 are formed in the same way as the embodiment 1.

Here, each three of the processed article 102 of Fig. 17 and each three of the processed article 103 of Fig. 18 are prepared. As shown by Fig. 19, the processed article 101 and the processed article 100 are disposed at uppermost and lowermost positions, three sets of the processed article 102 and the processed article 103 which are put face to face so as to locate the portion 31 and the portion 41 at opposite sides each other, are disposed between the processed article 101 and the processed article 100, they are laid one upon another at portions of the electrolyte layers 12a and 12b, the sealing agents 2a and 2b are thermally bonded each other under reduced pressure, so that an inside surrounded by the both current collector plates 3 and 4 and the sealing agents 2a and 2b is reduced pressure and hermetically sealed. The three processed articles 102 and the processed article 100 are formed by using the positive current collector plates 3 fitted with the terminal pieces 53 at different positions respectively, and the respective terminal pieces 53 are so disposed as to be located at positions as shown by Fig. 12 which is the plan view when the three processed articles 102 and the processed article 100 are laid upon another as illustrated by Fig. 19. The terminal pieces 54 for the three processed articles 103 and the processed article 101 are disposed in the same way. Fig. 20 is an oblique schematic view showing an assembly thus obtained with the terminal pieces 53 and 54 positioned upside. As shown by Fig. 12, the bent side portions 53b of the terminal pieces 53 are thermally bonded so as to joint all of the terminal pieces 53 integrally each other, and all of the terminal pieces 54 are also jointed integrally each other in the same way. Thereby, the layer-built film type battery of this embodiment shown in Fig. 10 can be obtained. A thickness of the generating element 1 is 0.2 to 1.0 mm.

In the layer-built film type battery of this embodiment, heat radiation is also done well because the portions 31 of the positive current collector plates 3 and the portions 41 of the negative current collector plates 4 function as radiation fins in the same way as the embodiment 1. Therefore, according to the layer-built film type battery of this embodiment, the rise of internal temperature can be controlled even when the power consumption becomes large. Maximum values of internal temperature at high-rate discharge were examined on the layer-built film type battery of this embodiment and a conventional layer-built film type battery shown by Fig. 28, and the value was 69°C for the conventional battery but it was 28°C for the battery of this embodiment. In other words, the rise of internal temperature is controlled to the extremely low value in the battery of this embodiment.

In addition, since the portions 31 and the portions 41 are located at opposite positions each other, that is, they are so installed as not to be laid one upon another when the layer-built film type battery is viewed in the plan view position; the electric short-circuiting is not produced. Further, since the terminal pieces 53 and 54 are also so installed as not to be laid one upon another in the same way as the embodiment 1 when the layer-built film type battery is viewed in the plan view position, the electric short-circuiting is not produced.

Moreover, since the notches 53a and 54a are formed on the terminal pieces 53 and 54 so that they are made narrow at middle portions, the pieces will be molten down at the narrowed portions when a consumed power exceeds a specified limit. Namely, the terminal pieces 53 and 54 function also as fuses. And, they are made narrow in widths at the rear portions rather than at the front portions beyond the notches 53a and 54a, the terminal pieces 53 are so fitted that only their front portions are laid one upon another when the layer-built film type battery is viewed from the plan view position, and the terminal pieces 54 are also fitted in the same way. Therefore, mutual contact of the terminal pieces 53 and mutual contact of the terminal pieces 54 i.e. electric connections can be prevented, which are caused by remains molten after an occurrence of the foregoing melting. Consequently, the fuse function is positively exercised, the generating element 1 becoming faulty is securely cut off, and an abnormal rise of internal temperature can be avoided securely, so that bad influences on environments caused by firing and bursting of the battery can be prevented.

In addition, the processed article 102 of Fig. 17 and the processed article 103 of Fig. 18 are those obtained by continuously processing the positive current collector plate 3 and the negative current collector plate 4 having similar dimensions and shapes by using the similar processes. Since the front parts of respective terminal pieces 53 and 54 are previously coated with zinc, the terminal piece 53 or the terminal piece 54 are easily jointed each other. Therefore, the layer-built film type battery of this embodiment can be obtained with good productivity.

As described above, according to the layer-built film type battery of this embodiment, the rise of internal temperature can be controlled to an extremely low value even when the consumed power becomes large, the bad influences on environments caused by the abnormal rise of internal temperature can be prevented securely, these advantages can be accomplished without producing the electric short-circuiting, and productivity can be improved.

Incidentally, the adjoining terminal pieces 53 or 54 may be jointed as illustrated by Fig. 21 and Fig. 22 which is a sectional view taken on a line XXII-XXII of Fig. 21. Namely, they may be jointed without bending the sides of the front portions.

### (Embodiment 3)

Fig. 23 is an oblique view showing another embodiment of layer-built film type battery of this invention. Fig. 24 is a sectional view taken on a line XXIV-XXIV of Fig. 23. This layer-built film type battery is same with that of the embodiment 1 in the point that; it is made up in such a way that the positive active material layer 11, the electrolyte layers 12a and 12b, and the negative active material layer 13 are laminated into a layer structure to form the generating element 1, and plural generating elements 1 are laminated with the positive current collector plates 3 or the negative current collector plates 4 put between them. However, the generating elements 1 provided with the both current collector plates 3 and 4 are laminated with frame materials 60 forming ventilating spaces put between them on every voluntary quantity of generating element 1, and every two elements in this instance. The other structure is same with that of the embodiment 2, and components same with those of the figure showing embodiment 2 are attached with the same symbols.

The frame material 60 has grooves 61 at voluntary positions of four sides so that ventilation between inside and outside is enabled by the grooves 61 and an ventilation space is formed inside. Holes passing from inside to outside may be made in place of the groove 61.

The film type battery having such structure is formed as shown in Fig. 26, by laminating the processed article 101 of Fig. 8, the processed article 102 of Fig. 17, a processed article 101a formed by deviating the generating element 1 to a side that is opposite side in case of the processed article 101 , and the frame material 60 of Fig. 25 etc., in the same way as the embodiment 2.

In the layer-built film type battery of this embodiment, heat is also radiated from a surface of the negative current collector plate 4 facing on the fame material 60 because the ventilation space is made by putting the fame material 60. Therefore, the heat radiation is done further better than the case of embodiment 2, and the rise of internal temperature can be controlled securely even when the consumed power becomes large. Maximum values of internal temperature at high-rate discharge were examined on the layer-built film type battery of this embodiment and the conventional layer-built film type battery of Fig. 28, and the value was 69°C for the conventional battery but it was 25°C for the battery of this embodiment. In other words, the rise of internal temperature is controlled to the extremely low value in the battery of this embodiment, as compared not only with the conventional battery but with the battery of embodiment 2. Other functions and effects are same with those of the embodiment 2.

In the layer-built film type battery of this embodiment shown in Fig. 23, the negative plates protrude from both faces. However, the battery may be formed into such a structure that the positive plates protrude from the both faces.

### Industrial Applicability

This battery is utilized effectively for a small battery for use in an equipment consuming a large electric power, so that its industrial value is large.

## Claims

1. A film type battery having a laminated layer structure comprising:
a positive current collector plate (3); a positive active material (11); electrolytes (12a, 12b); a negative active material (13) and a negative current collector plate (4),
wherein both active materials and electrolytes are sealed at their peripheries, both current collector plates are integrated by sealing agents (2a, 2b) and portions (31, 41) free of active materials, electrolytes and sealing agents remain on the current collector plates,
characterised in that terminal pieces (53, 54) having narrowed middle portions (53a, 54a) functioning as fuses are provided on one side of each current collector plate (3, 4).

2. A layer-built film type battery comprising a plurality of generating elements laminated with positive or negative current collector plates (3, 4) between them,
each generating element comprising: a positive active material (11); electrolytes (12a, 12b) and a negative active material (13) laminated into a layer structure,
wherein both active materials and electrolytes are sealed at their peripheries, the current collector plates are integrated by sealing agents (2a, 2b) and portions (31, 41) free of active materials, electrolytes and sealing agents remain on the current collector plates,
characterised in that terminal pieces (53, 54) having narrowed middle portions (53a, 54a) functioning as fuses are provided on one side of each current collector plate (3,4), all terminal pieces (53) for the positive current collector plates (3) being joined together, and all terminal pieces (54) for the negative current collector plates (4) being joined together.

3. A battery according to claim 1 or claim 2, wherein the terminal pieces for the positive current collector plate(s) do not overlie the terminal pieces for the negative current collector plate(s) when viewed from a plan view position.

4. A battery according to any one of the preceding claims, wherein the portions of the positive current collector plate(s) free of active materials, electrolytes and sealing agents do not overlie the portions of the negative current collector plate(s) free of active materials, electrolytes and sealing agents when viewed from a plan view position.

5. A layer-built film type battery according to claim 2, wherein the terminal pieces have rear portions narrower than front portions beyond the narrowed middle portions, and only front portions of the terminal pieces overlap each other when viewed from a plan view position.

6. A layer-built film type battery according to claim 2 or claim 5, wherein the terminal pieces are joined together by molten zinc, tin-zinc alloy or tin-lead alloy precoated on their tips.

## Patentansprüche

1. Filmbatterie mit einer laminierten Schichtstruktur, umfassend: eine positive Stromabnehmerplatte (3), ein positives aktives Material (11), Elektrolyte (12a, 12b), ein negatives aktives Material (13) und eine negative Stromabnehmerplatte (4), wobei sowohl die aktiven Materialien als auch die Elektrolyte an ihren Rändern abgedichtet sind, die beiden Stromabnehmerplatten durch Dichtungsmittel (2a, 2b) integriert sind und Teile (31, 41), die frei von aktiven Materialien, Elektrolyten und Dichtungsmitteln sind, auf den Stromabnehmerplatten verbleiben,
dadurch gekennzeichnet, daß Endstücke (53, 54) mit verengten Mittelteilen (53a, 54a), die als Sicherungen dienen, auf einer Seite jeder Stromabnehmerplatte (3, 4) bereitgestellt werden.

2. Aus Schichten aufgebaute Filmbatterie, die eine Vielzahl stromerzeugender Elemente umfaßt, die mit positiven oder negativen Stromabnehmerplatten (3, 4) dazwischen laminiert sind, wobei jedes stromerzeugende Element ein positives aktives Material (11), Elektrolyte (12a, 12b) und ein negatives aktives Material (13) umfaßt, die zu einer Schichtstruktur laminiert sind, wobei sowohl die aktiven Materialien als auch die Elektrolyte an ihren Rändern abgedichtet sind, die Stromabnehmerplatten durch Dichtungsmittel (2a, 2b) integriert sind und Teile (31, 41), die frei von aktiven Materialien, Elektrolyten und Dichtungsmitteln sind, auf den Stromabnehmerplatten verbleiben,
dadurch gekennzeichnet, daß Endstücke (53, 54) mit verengten Mittelteilen (53a, 54a), die als Sicherungen dienen, auf einer Seite jeder Stromabnehmerplatte (3, 4) bereitgestellt werden, wobei alle Endstücke (53) für die positiven Stromabnehmerplatten (3) miteinander verbunden sind und alle Endstücke (54) für die negativen Stromabnehmerplatten (4) miteinander verbunden sind.

3. Batterie gemäß Anspruch 1 oder Anspruch 2, wobei die Endstücke für die positiven Stromabnehmerplatten nicht über den Endstücken für die negativen Stromabnehmerplatten liegen, wenn man von oben bzw. unten daraufblickt.

4. Batterie gemäß einem der vorangehenden Ansprüche, wobei die Teile der positiven Stromabnehmerplatten, die frei von aktiven Materialien, Elektrolyten und Dichtungsmitteln sind, nicht über den Teilen der negativen Stromabnehmerplatten, die frei von aktiven Materialien, Elektrolyten und Dichtungsmitteln sind, liegen, wenn man von oben bzw. unten daraufblickt.

5. Aus Schichten aufgebaute Filmbatterie gemäß Anspruch 2, wobei die Endstücke hintere Teile haben, die enger sind als vordere Teile, die jenseits der verengten Mittelteile liegen, und nur vordere Teile der Endstücke einander überlappen, wenn man von oben bzw. unten daraufblickt.

6. Aus Schichten aufgebaute Filmbatterie gemäß Anspruch 2 oder Anspruch 5, wobei die Endstücke durch geschmolzenes Zink, Zinn-Zink-Legierung oder Zinn-Blei-Legierung, die an ihren Spitzen vorbeschichtet waren, miteinander verbunden worden sind.

## Revendications

1. Pile du type film à structure stratifiée, comprenant :
une plaque collectrice de courant positive (3), une matière active positive (11), des électrolytes (12a, 12b), une matière active négative (13) et une plaque collectrice de courant négative (4),
dans laquelle les deux matières actives et les deux électrolytes sont scellés à leurs périphéries, les deux plaques collectrices de courant sont intégrées par des agents d'étanchéité (2a, 2b), et des parties (31, 41) dépourvues de matières actives, d'électrolytes et d'agents d'étanchéité restent sur les plaques collectrices de courant,
caractérisée par le fait qu'une borne (53, 54) ayant une partie médiane rétrécie (53a, 54a) jouant le rôle de fusible est prévue sur un côté de chaque plaque collectrice de courant (3, 4).

2. Pile du type film stratifiée comprenant une série d'éléments générateurs disposés en couches superposées avec des plaques collectrices de courant positives ou négatives (3, 4) entre eux,
chaque élément générateur comprenant une matière active positive (11), des électrolytes (12a, 12b) et une matière active négative (13) disposés en couches superposées,
dans laquelle les deux matières actives et les deux électrolytes sont scellés à leurs périphéries, les plaques collectrices de courant sont intégrées par des agents d'étanchéité (2a, 2b), et des parties (31, 41) dépourvues de matières actives, d'électrolytes et d'agents d'étanchéité restent sur les plaques collectrices de courant,
caractérisée par le fait qu'une borne (53, 54) ayant une partie médiane rétrécie (42a, 53b) jouant le rôle de fusible est prévue sur un côté de chaque plaque collectrice de courant (3, 4), toutes les bornes (53) des plaques collectrices de courant positives (3) étant jointes et toutes les bornes (54) des plaques collectrices de courant négatives (4) étant jointes.

3. Pile selon la revendication 1 ou batterie selon la revendication 2, dans laquelle la borne de la plaque collectrice de courant positive ou les bornes des plaques collectrices de courant positives ne recouvre(nt) pas la borne de la plaque collectrice de courant négative ou les bornes des plaques collectrices de courant négatives lorsque celles-ci sont vues en plan.

4. Pile selon l'une des revendications précédentes, dans laquelle les parties de la ou des plaques collectrices de courant positives dépourvues de matières actives, d'électrolytes et d'agents d'étanchéité ne recouvrent pas les parties de la ou des plaques collectrices de courant négatives dépourvues de matières actives, d'électrolytes et d'agents d'étanchéité lorsque celles-ci sont vues en plan.

5. Pile du type film stratifiée selon la revendication 2, dans laquelle les bornes ont des parties arrière plus étroites que des parties avant au-delà des parties médianes rétrécies, et seules les parties avant des bornes se recouvrent lorsqu'elles sont vues en plan.

6. Pile du type film stratifiée selon l'une des revendications 2 et 5, dans laquelle les bornes sont jointes par du zinc fondu, un alliage étain-zinc ou un alliage étain-plomb appliqué préalablement sur leur extrémité.
